# EUROPEAN PATENT SPECIFICATION

(11) **EP 2 894 972 B1**
(45) Date of publication and mention of the grant of the patent: **02.11.2016**
(21) Application number: 13756719.4
(22) Date of filing: 05.08.2013
(51) Int. Cl.: A01K 29/00

(54) **METHOD AND SYSTEM FOR CREATING A MAP OF A BARN**
VERFAHREN UND SYSTEM ZUM ERZEUGEN EINER KARTE EINES TIERSTALLES
PROCÉDÉ ET SYSTÈME PERMETTANT DE CRÉER UNE CARTE D'UNE ÉTABLE

(30) Priority: 13.09.2012 NL 2009456
(43) Date of publication of application: 22.07.2015
(73) Proprietor: Lely Patent N.V., 3147 PB Maassluis (NL)
(72) Inventor: VAN DER KAMP, Adolf Jan, NL-3147 PA Maassluis (NL); DE GROOT, Ester, NL-3147 PA Maassluis (NL); KOOL, Pieter Neelus, NL-3147 PA Maassluis (NL); MEIJERS, Sjors, NL-3147 PA Maassluis (NL)
(74) Representative: Octrooibureau Van der Lely N.V.
(86) International application number: PCT/NL2013/050578
(87) International publication number: WO 2014/042519

(56) References cited:
- WO-A1-2011/055004
- US-A1- 2002 116 200

## Description

The present invention relates to a method of automatically creating a digital map of an animal barn, wherein the animal barn comprises a plurality of types of barn elements, a plurality of animals in said barn, and an animal locating system that is configured to determine a position of at least one of said animals in said barn. The invention further relates to a system configured to automatically create a digital wap of an animal barn with a plurality of types of barn elements. (See e.g. WO2011/055004 A1)

In the practice of animal husbandry, it is advantageous to have available a digital map of a barn, i.e. a walled space in which animals are free to walk. E.g. if a farmer desires to know the whereabouts of a certain individual animal, such as to give the animal a particular treatment or to fetch the animal for some reason, such a map can be helpful to him, especially if available in digital form. Also, to learn about animal behaviour, it is deemed of interest to know where individual animals are during their stay in the barn. A more general advantage lies in the possibility to use the map in farm or animal management.

To obtain such a map, in the art there have been disclosures of systems to generate a map based on position measurements. However, these all require human input. For example, a most straightforward solution, which is however at the same time very labour-intensive, is to draw a digital map on a computer, by means of a drawing program and a paper map. There have been devised ways to try and automate this. For example, patent document WO2011/055005 generally deals with monitoring the path of an animal or human in the home by means of a locating system. In the document, a method is disclosed for drawing a digital map. Thereto a person provided with a device by which his position can be monitored walks around through the home. In each corner of each room, the person's position is registered, e.g. after pressing a button in the monitoring device. Then, on the basis of the registered positions, some computer that is not further described generates a floor plan. Lateron, a human user may also enter furniture and the like in the map.

This known method, and device, has a drawback in that it requires a significant amount of human work.

It is therefore an object of the present invention to provide a method of drawing such map with minimal human intervention.

This object is achieved with a method according to claim 1, in particular a method of automatically creating a digital map of an animal barn, wherein the animal barn comprises a plurality of types of barn elements, a plurality of animals in said barn, and an animal locating system that is configured to determine a position of at least one of said animals in said barn, the method comprising the steps of automatically collecting position data with the animal locating system about the position of said at least one animal in said barn as a function of time, providing, for at least a plurality of types of barn element, a first set of criteria for correlating said position data to said type of barn element and a second set of criteria for determining the position of said type of barn element, automatically applying the sets of criteria to the position data, to thereby derive the type and position of at least a first barn element of a first type, and automatically creating the map with at least said first barn element and the type and position thereof.

The invention is based at least in part on the insight that it is possible to provide criteria to determine an element type from animal position data, more in particular to provide criteria for automatically determining the element type from a plurality of element types, on the basis of position data. Thereby, it becomes feasible possible to automatically position that element in a (virtual) barn, and subsequently draw a map based on the data collected and processed. This will greatly help e.g. a farmer in obtaining a map of his barn. Such a map he may use for managing the animals in that barn. For example, it may help him when looking for an animal to be treated. Indicating the animal on the map will shorten the time needed for him to find the animal. Furthermore, only after having such a map in the first place may the farmer obtain a real insight in the behaviour of the animals in the barn.

Note that even when the map is not complete, in that one or more barn elements have not been found or derived from the data, the farmer will still have a good starting point for the map. This will still save him a lot of work. Of course, a big advantage herein is that the animals do the work for the farmer, simply by following their daily routine. In the present invention, the barn elements may be of many types, such as a cubicle, a feed fence, a milking robot, a gates, a walking path, or any other type of barn element that has some interaction with the animal, from which interaction the type of element and its position may be determined with a reasonable, predetermined certainty. Obviously, light switches, tap water connections and the like are not types of barn element to be determined here.

Furthermore, it will be clear that the invention relates to using the position data of non-human animals. It is noted that it is known to use human work, in the form of a person walking around with a location sensor, for making a map of a room, building, office or the like. However, this known method requires a lot of human work, while the present invention is aimed at preventing, or at least significantly reducing, that human work. Thereto, it uses the animals in the barn themselves. Note furthermore that it suffices if the positions in time of at least one animal are determined, as data from one animal would in principle suffice. However, using the position data from more animals, or even all animals in the barn, will likely lead to more data and thus a quicker and/or more reliable determination of type and position of barn elements. Furthermore, in some cases animals have habits that prevent them from using e.g. certain cubicles or parts of a feed fence, which would thus remain "invisible" or undetected. It should also be realised that it is sometimes rather expensive to collect position data from all (or at least many) animals, as this may sometimes require tagging the animals with dedicated tags.

In the present method, the position data about the position of said at least one animal in said barn are collected as a function of time. This collecting takes place during a predetermined period of time, or until the position data are determined to be sufficient, i.e. fulfil a predetermined sufficiency criterion. For example, the data are collected during two or three days, or any other period of time in which the herd will likely have exhibited its normal behaviour. In many cases, the predetermined period of time may be dependent on the number of animals for which data are collected, as a higher number will likely generate more data per unit time. Alternatively or additionally, the position data may be collected until a sufficiency criterion has been fulfilled. For example, this may relate to the likelihood with which a barn element has been determined from the data, such as the determination with a 95% likelihood that a feed fence is present at a certain position. In such cases, it would not make much sense to keep on collecting data, which would require resources unnecessarily. Furthermore, in some cases it may happen that, by some coincidence in the animals' behaviour, the specific data collected enable a quick determination, while in other cases more data are required. Moreover, the predetermined period of time and/or the sufficiency criterion may be dependent on the type of barn element. For example, in the straightforward case that a certain barn element has its own ID (identification) station, determining its position in the barn requires not more than one animal position datum. Other elements may require a large number of data before a reliable determination can be obtained.

Another remark is that automatically drawing the map *per se* is deemed well-known to the skilled person. Thereto, there will be provided some computer program in the computer system that places the barn elements that have been derived from the animal position data, together with the positions of those barn elements, in their relative positions, i.e. in a map. This map will now become available for further use, although it is not necessary to output it, as it may also be used for further processing for example animal data. This will elucidated further below.

It is also noted that the first set of criteria need not comprise more than one criterion. A simple example would be that only barn elements with an ID station are determined, such as a milking station, a concentrate feeding station and a selection gate. Then, the only criterion would relate to e.g. determining a position at the time of the ID determining, and coupling the position with the type of ID station. Of course, in many other cases there may be more than one criterion for determining what type of barn element is positioned where. Herein, the criteria for determining the type of barn element and/or the criteria for determining its position in the barn are based on the animal position data. Finally, it is noted that the method need not succeed in actually determining the position of more than one barn element, as sometimes the data will be too ambiguous or sparse. However, it is to be noted that the invention relies on the possibility to automatically determine a type of barn element from a plurality of possible barn elements, based on animal position data. Herein, it is relatively arbitrary what exact criteria are used. Although examples of criteria will be given below, these may vary widely. But the insight is the possibility to devise such criteria, and to use them to select an element type, and its position, from a plurality of element types automatically, and finally to draw the map automatically. Advantageous and special embodiments will be described in the dependent claims, as well as in the description that follows.

In embodiments, the method further comprises outputting the map to an output device. In this way the farmer, veterinarian or other user can check positions and the like on the output device, in order to use the displayed (positional) information for work. The output devices may be of any known kind, such as visual output means, e.g. a computer screen, in particular a desktop or laptop computer, but preferably also personal mobile devices such as a smart phone or the like. It may also be physical output means, e.g. a printer or plotter or the like. It is not necessary, though, to output the map. It is also possible to just create the map in e.g. a computer memory and further use it in software, such as for example analysing animal behaviour or the use of devices in the barn. In such cases, outputting the map would not always serve a purpose and could be left out. In providing the map, all of its outline and elements may be drawn to scale. However, it is also possible to draw the outer dimensions of the barn as well as all positions of barn elements in the barn to scale, while the elements themselves are shown with exagerated dimensions, for more clarity. Other ways to show the map are not excluded, such as using pictograms.

In particular, the step of applying the sets of criteria to the position data to thereby create the map comprises deriving the type and position of at least a second barn element of a second type. Such embodiments use the invention advantageously in that they allow to discern between different types of barn elements. This special insight is helpful in letting the animals do the work. Note that there is a conceptual difference between, on the one hand, determining whether or not a barn element of one certain type is present or not, and if yes, determining its position, and on the other hand determining which type of barn element relates to the collected position data, assigning the correct type to (part of) the data, and determining the position connected to the determined barn element. This insight has been implemented in the first set of criteria, i.e. the set that is used to determine the type of barn element. Again, the insight is that it now becomes feasible to do so automatically. Examples of such criteria will be given.

In certain embodiments, the type of barn elements is selected from a cubicle, a feed fence/device, a gate, a walking path, a drinking trough/device, an animal body brush, a waiting area, a separation area, and an animal ID station. Such an animal ID station is any station, or device, at which an animal is automatically identified, i.e. its ID established. In particular, such an animal ID station is or comprises a milking robot or an individual feeding station. With the above types of barn elements, it is possible to cover relevant types of barn element, with respect to animal management, with some of the most relevant being the milking station(s), the feed fence/device and the cubicles, as they relate directly to the most important managerial aspect, *viz.* milking. In addition to the above mentioned types of barn elements, any other desired type may also be included, as long as it is possible and feasible to define one or more criteria for discerning such barn element from the other types. It is the combination of defining the barn element types and the criteria for discerning them that lies at the heart of the invention.

In certain embodiments, the first set comprises an animal ID station criterion for determining the element type from animal position data. In particular this comprises assigning the type of animal ID station to the animal position of an animal. When an animal is identified at an animal ID station, this information is already sent to the managament system, often if not always at least for any device at that animal ID station, such as a milking robot or a feed dispenser or the like. After all, the ID station is provided there in order to determine the animal's ID for setting individual values of the relevant device. Then, the type of ID station is certainly known, and can easily be coupled to the animal position of the identified animal. If that animal's position is determined frequently enough, such as every ten seconds or the like, the animal's position at the time right before and/or after the identification may already be a sufficiently reliable position determination for the animal ID station. It is possible to increase the accuracy by taking the average of a plurality of determined animal positions for a corresponding plurality of animal identifications, as the animals will likely move towards or from the animal ID station in a more or less random fashion. Even more accurate determinations become possible if the animal's position is determined when said animal is identified at said animal ID station. Herein, one could say that the animal position of an animal is actively determined upon identification thereof in an animal ID station. It follows that, in embodiments, the second set comprises assigning the animal position to the animal ID station position.

In embodiments, the first set comprises at least one movement criterion that is based on at least a movement of an animal, wherein the movement is determined as a time-dependent displacement, in particular in a straight line between two or more consecutively determined positions of said animal. It provides advantages if not only position data are used but also information on movement of animals. Such movement may be determined by looking at consecutive animal positions. Analysing such a path may provide useful clues for distinguishing various barn elements from one another, as will be exemplified below. For example, it is possible thereby to determine a path followed by the animal, or an area in which many consecutive position are located, as a kind of favourite location. Also, speed may be determined, and in a first approximation as the linear displacement between two consecutive animal positions, divided by the time therebetween. More refined models, including acceleration and deceleration or the like, may be used to determine speed more accurately. As an example, if an animal walks from a first position to a second position in a more or less straight line and with a more or less constant speed, the presence of barn elements other than a walking area or path between the first and second position is not very likely. If the same holds for more animals when measured (approximately) between those two positions, it may be safe to assume that there is indeed a walking area or path between the two positions. In any case, using not only positions per se, but analysing the positions in time, including speed as derived therefrom, expands the gambit of possible criteria for use in distinguishing barn element types.

In exemplary embodiments, said movement criterion comprises a cubicle criterion. Herein, a cubicle criterion is used to distinguish a cubicle in the position data collected. Cubicles are relevant in animal management because they are an indication for the time that an animal spends ruminating, which is in turn an indication for the future milk production. Therefore, such a cubicle criterion is important to have. However, it is noted that a cubicle is a barn element poor in features, and thus relatively difficult to characterise. Nevertheless, in exemplary modiments, said cubicle criterion comprises at least one of: determining that an animal position remains at a prospect position within a predetermined margin during at least a predetermined first period of time, wherein said margin is at most a half length of said animal, and determining that said animal movement comprises a movement in a first direction, followed by a subsequent animal movement in a second direction substantially perpendicular to said first direction, followed by an animal position at a substantially constant prospect position during at least a predetermined first period of time, followed by a animal movement substantially opposite the second direction, followed by a animal movement substantially perpendicular to the second direction,
and wherein the second set comprises assigning a cubicle position to said prospect position. In particular, said predetermine d first period of time is animal type dependent, but for cows, a period of 30 minutes, more in particular 60 minutes, is a safe threshold for distinguishing rumination, when lying down, from other activities. In particular, said period of time is at least one hour. Note that the basic insight used here is that a dairy animal will spend periods of time of at least a predetermined length almost exclusively for ruminating, in particular if cubicles are available. For almost any other activity, she will change her position much quicker. Therefore, it would in principle suffice to determine that an animal's position, the prospect position, remains substantially the same, such as in particular within half the animal's length or within a certain predetermined area, for at least a predetermined period of time, and then assigning a cubicle position to said prospect position. Some of the embodiments mentioned above further take into account that cubicles are almost always provided in a side-by-side row, with a walking alley in front of such a row. Then, a dairy animal will almost always walk along such a path, and then enter a cubicle. This will be done by making a right-angle turn and lying down during a period of time. Then, for leaving the cubicle, the animal will have to stand up, walk backwards, unless the cubicle is very wide, make another right-angle turn and walk along the path.

The above embodiments show that it is feasible to define criteria for distinguishing a cubicle from other barn elements. Nevertheless, other criteria may be used, as alternatives or additions. As a very general remark here, it is possible to enter boundary conditions, such as the total dimensions of the barn, the number of animal ID stations and the number of cubicles, although these are, in all cases shown, possible to determine from animal position data alone. However, having such data beforehand allows to determine cubicles in another way, such as by determining one or more groups of positions/areas in which animals are present individually, that is one at most, during prolonged periods of time, while no traffic is possible between such positions/areas directly. This is a clear difference to a walking area or e.g. a feed fence, where animals may stand for a while, but where the animals may choose to walk directly from one position to another, without having to go backwards and then via a walking alley or the like. It is to be noted, however, that for example a group of milk boxes, also side by side, should be distinguished. The latter however, will have ID stations in most cases.

In embodiments, the method further comprises detecting a sound selected from eating sounds, rumination sounds and drinking sounds, by means of a sound sensor worn by at least one of the animals, wherein at least one of the criteria is dependent on the detection of at least one of said sounds. Then, at least one criterion may comprise distinguishing the type of action performed by the animal, such as drinking when a drinking noise is detected, and feeding when a feeding noise is detected, and ruminating when rumination sounds are detected. The at least one criterion may then also comprise distinguishing between a feeding station/feed fence or the like, a drinking station/trough, and a cubicle, respectively, and of course assigning the relevant measured animal position to the distinguished station/device. Devices for determining sounds from animals and assigning these sounds to certain activities are for example disclosed in WO00/13393 and WO02/07644, and marketed by e.g. Lely Industries as the QWES-HR tag.

A more elaborate criterion, or set of criteria, for a feed fence may comprise the movement of an animal in a first direction, a substantially right angle turn, followed by a displacement over a short distance, followed by a stay during a period of time that is usually associated with eating of the animal. This period may be determined when the above mentioned eating sounds sensor or arrangement is provided. The period could then be followed by a moving away over a short distance, which however need not be backwards, but could comprise a simple quarter turn or the like, for easy distinguishing from a cubicle. Then, the animal could continue its path in the barn in any direction. Herein, the various positions are more or less randomly distributed, and there may be traffic between the various positions along a border of the collection of these positions, unlike cubicle positions.

In all of the above, many examples have been given how to discern various types of elements in a barn from animal position data. The skilled person is thus enabled to derive the position of all the barn elements for which he can design suitable selection criteria, which criteria are then put into the automated method according to the invention. It is important to point out that the very thought that it is possible and feasible to automatically distinguish barn elements from animal position data which lies at the heart of the invention. And even if not all barn elements may be located and positioned on the map, there is still provided a way to save a lot of work by automatically performing this arduous task for a lot of barn elements.

As already indicated in the previous part of the description, the position data are used to assign a collected animal position to a barn element, or at least derive a position of the barn element from the collected animal position data, with the help of the second set of criteria. In embodiments, the second set comprises assigning to the position of a barn element a position that is based on at least one of the animal positions that were used in positively assigning an element type to said barn element. This is one of the easiest ways to determine a barn element position from the animal position data. For example, as has already been indicated in the above, the position of an animal ID station can be determined by assigning an (average) animal position upon identifying that animal at the animal ID station. It is also possible to use a plurality of the animal positions that were used in positively assigning an element type to said barn element. For example, taking an average of the animal positions upon their respective identification at said animal ID station gives a more accurate position of that animal ID station. In addition, and importantly, it is to be realised that most barn elements have a certain size and spatial extent. Therefore, although the position of a barn element can be approximated by a single point, or animal position or the like, it may be more instructive to know the spatial extent of a barn element, up to a certain extent. This may include dimension, directions et cetera.

Additionally or alternatively, positions and/or movements of animals, or more generally the animal position data, may also be used in a different way. In order to determine the orientation and spatial extent, it is also possible to use the way in which animals approach the barn element. For example a milking station's position is taken as the (average) position of the animal upon identification at the milking station's ID station. However, the milking station (or milking robot or milking box) has a certain spatial extent which is considerable. By realising that there may be queues of waiting animals at the entrance gate, but not normally any waiting animals after the exit gate, one can use data where animals queue up in the vicinity of the milking station as the position of the entrance gate, and position data where animals only walk away from the milking station as the exit gate. With this information, the box may be oriented and positioned more accurately. Similar considerations may hold for other barn elements, and will be contemplatable for the skilled person.

The invention also relates to a system configured to automatically create a digital map of an animal barn with a plurality of types of barn elements, according to the method of the invention, the system comprising an animal location system, configured to determine position data of at least one animal in said barn, a computer system configured to: automatically collect said position data as a function of time, characterized in that the computer system is further configured to: store a first set of criteria for correlating said position data to said type of barn element and a second set of criteria for determining the position of said type of barn element, apply the sets of criteria to the position data, to thereby derive the type and position of at least a first barn element of a first type, and automatically create the map with at least said first barn element and the type and position thereof. The system may be a stand alone system, or be integrated with an animal management system or the like. Furthermore, it is remarked here that the advantages as discussed for the method according to the invention largely hold as well for the system, and need not be repeated here in all detail.

In embodiments, the system further comprises an output device, wherein the computer system is configured to output the map to the output device. As mentioned before, such output device often is a screen, of a computer, cell phone or the like, or a printer, and so on. Advantageously, the output device may be operatively connected to said computer system and configured to display said map, e.g. for direct use by a user such as a veterinarian.

The animal location system may comprise at least one position tag worn by said at least one animals and a receiver device arranged to detect wirelessly the position of said tag in the barn. Such a combination of animal worn tags and a receiver device serves as a kind of GPS in the barn, as all animals with such a tag can be positioned. It could also be a true GPS system, such as disclosed in US2012182145, or any other known animal locator system. The tag may be, or may be combined, with the animal ID tag, that is used for identification at e.g. a milking station.

The animal location system may also advantageously comprise at least one autonomous vehicle that either comprises a position tag or comprises a dedicated positioning system arranged to communicate with the animal location system. The position information obtained by locating the vehicle can then simply be used for mapping. Such a vehicle could be a manure displacer, such as the Lely Discovery (TM), a feed displacer, such as the Lely Juno (TM) or any other such vehicle. Advantageously, such a vehicle can be arranged for following a wall, such as by simply keeping a constant distance to an object. In this way, it is even possible to map sidewalls or other large wall-like objects as barn elements, which are somewhat difficult to track by the animals, as they will often have no need to follow or stay close to a wall along a greater part of its length.

In embodiments, the system further comprises an arrangement operatively coupled to the computer system and provided with a sound sensor for detecting animal sound, comprising at least one of eating sounds, rumination sounds and drinking sounds. As mentioned before, such sound sensor and arrangement may be helpful in determining the barn element, by providing additional information about the type of activity performed by the animal at its location. An example of such a sound sensor is the rumination sound sensor of the Lely QWES-HR (TM). Such a sound sensor is advantageously provided on a neck tag, in particular on said position tag. There it is positioned suitable for determining the noises with the highest accuracy.

Although it is not particularly limiting where the analysis of the sound is performed, at least one of said sound sensor, said arrangement and said computer system may comprise a sound analysis device for sound analysis, configured to analyse said detected animal sound.

Herein is also disclosed a barn for keeping animals and comprising a plurality of barn elements of a plurality of types, and comprising a system according to the invention. In such a barn, it is easy to digitise its lay-out, as the animals themselves will provide the necessary information, which is then processed by the system into a digital map. Furthermore, when rearranging the barn's lay-out, a new map is equally easily created, by having the animals redo the work. It is also interesting to check how the animals get used to a new barn lay-out.

Herein is also disclosed a computer program comprising computer program instructions adapted to perform the method of the invention when run on a computer. If there is already a barn with an animal location system, such a computer program may be run for drawing the map, according to the present invention. In this way, a lot of work can be saved, and the program can be used for existing barns. It is noted that the program may be accesible via a network such as the Internet. Herein is disclosed a computer readable medium having stored thereon computer program readable instructions adapted to perform the method of the invention when run on a computer. Such a computer readable medium may come in the form of a (hard) disc, a USB-stick, a CD or DVD, or other memory device. It is noted that in this computer program, as well as in the underlying method, one embodiment comprises automatically collecting animal position data, and then performing one or more times the steps of
- applying one or more criteria for correlating said position data to a first type of barn element,
- if successful, determine the presence of a barn element of said first type of barn element
- applying one or more criteria for determining the position of said first type of barn element
- automatically updating the map with at least said barn element and said first type and the position thereof.
while if unsuccessful, collect more animal position data.

In this way, the position data are used step-by-step to determine the types and positions of as many (different) barn elements as possible.

The invention will now be explained further with reference to non-limiting embodiments, as shown and described in the drawings, in which
- Figure 1 is a diagrammatic top view of a barn, with a system according to the invention;
- Figure 2 is a diagram with animal positions during a predetermined period of time; and
- Figure 3 shows a flow diagram of a computer program and method of the present invention.

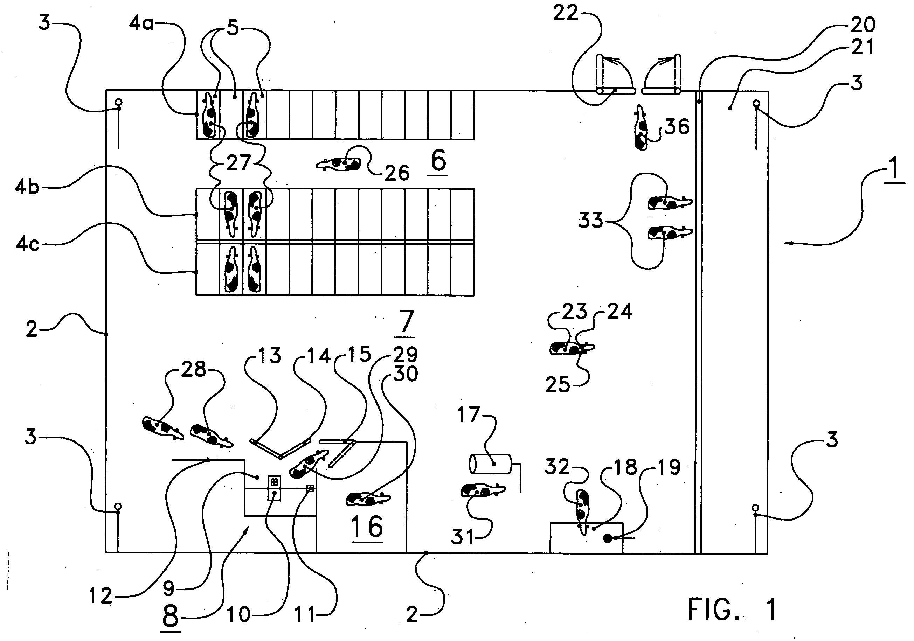

Figure 1 is a diagrammatic top view of a barn 1, with a system according to the invention.

The barn 1 has sidewalls 2 enclosing the barn space. In the barn, there is provided an animal location system, shown here as a number (four) of antennae 3 for receiving signals from animals and the like in the barn. The antennae 3 are operatively connected to a control system (not shown here). Their number is of course arbitrary, and dependent on type of locatin system, size and shape of the barn, presence of interefering elements, and so on.

In the barn are also provided a number of barn elements, such as rows 4a, 4b and 4c of cubicles 5, a walking path 6, a free area 7, a milking station 8, a cow brush 17, a drinking trough 18, a feed fence 20 and an exit gate 22. These will now be discussed in more detail.

First of all the walls 2 may either be a given, or may be determined as the outer bounds of any position ever collected, if the barn is completely closed. The rows of cubicles 5 are used by ruminants to ruminate quietly. This means that ruminants 27, from here on taken to be cows, although any other type of ruminant such as sheep or goats would do as well, are present. These cows 27 will lie down in the cubicles 5 after entering same from the walking path 6 or the free area 7. Their position will then remain constant for quite some time, and by taking a predetermined time threshold to be for example 1 hour, a stay of more than the time threshold will be a criterion for assigning a cubicle to a position. The walking path 6 will predominantly show cow traffic such as from cow 26, in that there will be a large part of positions that can be detected to be part of walking, i.e. a regular displacement with a substantially constant speed and largely all in the same direction. Note herein that cows are relatively efficient walkers, that will not often stray unnecessarily. Slightly in contrast, the free area 7 will show more different directions, as there are more different destinations to be reached from the free area 7 e.g. by the cow 23. Note that only for this cow 23, there is shown that she wears a neck collar 24 with a tag 25. It is this tag 25 that is detected by the antennae 3 of the animal location system. The tag 25 may also comprise an arrangement/sound sensor for detecting rumination, eating and/or drinking sounds.

One of these is the milking station 8, with a milking box 9, a milking robot 10 and an animal identification (ID) device 11. The milking box is accessible along a guide 12, via entrance gate 13, and exit gate 14. Reference numeral 15 indicates a selection gate for guiding animals, such as cows 29 and 30, that need to be separated into a separation area 16, from which animals can only leave when the farmer lets them out. The milking station shows a queue of cows 28 waiting to be milked, with a slowly changing position, towards a position in an animal ID station. There, the ID device 11 will identify a cow, last time cow 29. When the cow is identified, there is a coupling between the type of barn element, which is clearly the ID station 11 belonging to the milking station 8, and a specific cow 29 with its position. If that position is actively determined as soon as, or at least very close to the moment when, cow 29 is identified by ID station 11, the position of that station, and thereby of the milking station 8 is known. From the positions of queue cows 28, a position of the entrance gate 13 may be derived, and thus by implication also the position of exit gate 14. If, directly after identification in ID station 11, the position of the animal is tied to a certain small area 16 close to the milking station 8, that area 16 must be the separation area, with a separation gate 15 inbetween the milking station and the separation area. Note that the separation area is very often very close to the milking robot, although some corridor of any length might also lead to the separation area.

Furthermore, the cow brush 17 is a device that may be approached by a cow 31 from various directions, is then used during a period of time of, say, several minutes, and then left in any desired direction. This may reflect in the "flocking" of cow positions with various approach and leaving routes.

The drinking trough 18, with a tap 19, is used by cow 22. The sound sensor in the tag may detect drinking sounds. If these are detected, the position can be determined actively, or later on there may be made a connection in the data set between the time of detection of the drinking sounds and a position of said cow 22 at or around such time.

The feed fence 20 is a special barn element, in that it forms a barrier for the cows, in this case cows 33, although it is still inside the barn, with a feed area 21 behind it, only accessible to the farmer. Typical behaviour is that cows approach the feed fence from one side only, in a less orderly fashion than the rows of cubicles. There may be a similar approach along a walking path past the feed fence 20, followed by a right angle turn. It is also possible that there is a more straight line approach. Furthermore, there may be a moving from one position at the feed fence 20 to another in a straight line, without going backwards for a certain distance, as with cubicles 5. Certainly not least, it is possible to couple the cow position with the detectin of eating sounds, by means of the sound sensor in the tag.

Interestingly, if grazing is part of the animal management, there may be provided a gate 22, that can sway open in the direction of the arrows, for letting cow 3 pass to a grazing area behind the gate. This can be detected by a cow position signal dissappearing from the barn/system, and lateron reappearing. Note that, in general, it is possible for the present invention for there to be provided an animal ID station for identification of the animal, for example to see if grazing is allowed for this animal. The same may hold true for any other barn element, such as the cow brush, the drinking trough, the feed fence, and even the cubicles. In such a case, identification becomes very quick and very precise. Such complex and expensive system is however not necessary with the present invention.

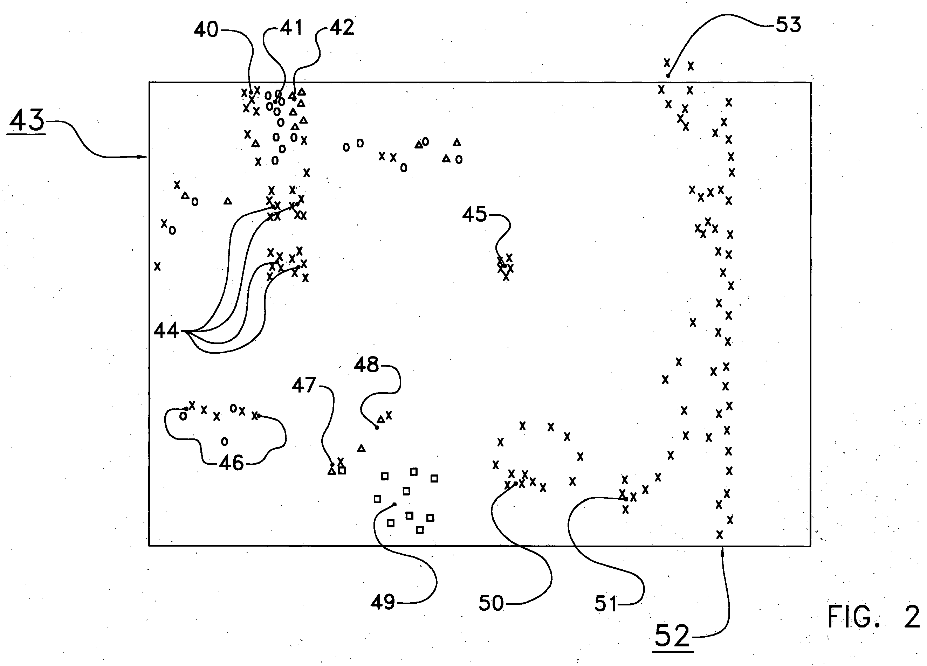

In connection with Figure 2, it will now be explained how the various types of barn element may be distinguished from animal position data. These are given in the form of a diagram in which all animal positions during this measuring time period have been indicated, mostly as crosses, sometimes with different labels.

In Figure 2, there is provided a diagram with animal positions during a predetermined period of time. Let us assume for the moment that this period of time either fulfils the criterion of a predetermined measuring time, and or that it has been established that all barn elements have been distinguished with sufficient certainty or likelihood. A possible parameter for determining this is the density of animal position data, or more precisely the difference in data density between parts of the total area measured. Generally speaking, if a certain area element has a certain data density (a certain number of positions per area), and that density is at least a certain factor higher than the density in the vicinity of that area element, there is a good chance that the data and the one or more criteria supplied suffice to determine the barn element type with sufficient reliability. Other ways to determine this may apply.

To begin with the analysis of the animal position data, there are a number of sets of closely-spaced positions 40, 41, 42. To indicate that it was always the same animal, they have been indicated with crosses, circles and triangles, respectively. This principle is also applied in other instances mentioned below, but only if its introduction would not lead to too much confusion in the drawing. Then, the positions remain substantially the same during a prolonged period of time, say at least 30 to 60 minutes, and there is no position change between groups 40, 41 and 42. A reliable conclusion about the presence of cubicle may then be drawn. If moreover a sound sensor is available, and when rumination sounds have been detected thereby, a more accurate determination is possible, for example even when the time threshold of 30 minutes is not exceeded. It is noted that even more conclusive evidence may additionally be that there are movements detectable in the positions along the direction indicated by 43. This indicates that animals have approached the clusters 40, 41 and 42 from a direction at a right angle to the positions in that cluster, which in turn indicates an entrance followed by a reverse movement for leaving the position, indicative of a cubicle as well.

More of these clusters have been indicated by 44 and 45. For clarity, any clusters between 44 and 45 have not been indicated, but may be assumed present. It is remarked that not every cubicle need be taken by a cow during the measuring time, due to preferences and habits. Nevertheless, detecting a row of clusters like 40, 41, 42, 44 and 45 is definitely a clear clue for a row of cubicles.

At 47, there has been indicated a number of cow positions for different cows, that have been detected at an animal ID station belonging to the milking station. Thereby, it is easy to determine that the (average of the) positions 47 can be assigned to the ID station of that milking station. The positions 47 may have been determined on cue, from a signal from the ID station, or as a position determined nearest in time to the time of identification.
Furthermore, with numeral 46, there has been indicated a kind of waiting area or queue. The average distance between consecutive positions of the same animal, or in other words the speed of those animals, in the vicinity of 46 is low, indicating waiting. Contrarily, on the opposite side with respect to the cluster 47, there is a dispersion of positions. This indicates that the entrance gate must be at the 46 side, while thus the exit gate is at the opposite side.

At 49, there is indicated an area with a number of positions of only a few cows (here only one) that are no longer present in any other part of the barn, and which therefore seem separated. Thus, the area covered by those positions indicates the separation area. Of course, it is also possible to use an indication from the management system, or at least the milking robot controller, that indicates when a cow is to be separated. It is thus also possible to determine with high reliability the separation area by measuring the range of positions for cows that have been separated as determined by the milking robot controller.

At 50, there is present a point cloud of positions, that have been approached from all sides, and can be left in all directions. The cloud indicates that the cows spend a certain amount of time at that position, but not above, say, a threshold for cubicles. No eating, rumination or drinking sounds are detected. Thus, it is assumed that this must be the cow brush area.

At 51, there is also a cloud of positions, but here drinking sounds have been detected. Thus, this is assigned the drinking trough.

At the positions indicated by 52, a long stretched cloud of positions indicates a lively visiting at numerous positions, with movements directly between such positions possible. The time spent can be measured, as well as the approaches and the leaving. All this, together with the long and straight shape of the cloud 52, indicates that this is the feed fence. If sound sensors are provided, eating sounds may be detected, which further increase the reliability of the detection.

At 53, there is indicated a cloud of positions that lie outside the boundaries of the barn, either as entered beforehand or determined as absolute outer bounds for most of the area, assuming straight sidewalls. Furthermore, the determination of position stops there for longer periods of time, because the cow is out of reach of the antennae/the location system. Then it is assumed that there is a gate at 53 to a grazing area.

In the above, many different barn elements have been indicated, as well as ways to distinguish these from animal position information. In case another barn element type is introduced, it will almost always be possible to connect animal behaviour, in particular their positions or movements, to that barn element, and distinguish it in the total position data. note furthermore that a lot of animal positions measured have not been indicated, to make the picture a lot clearer. In practice, there will be lots of positions that are only indicative of say free area 7, if at all.

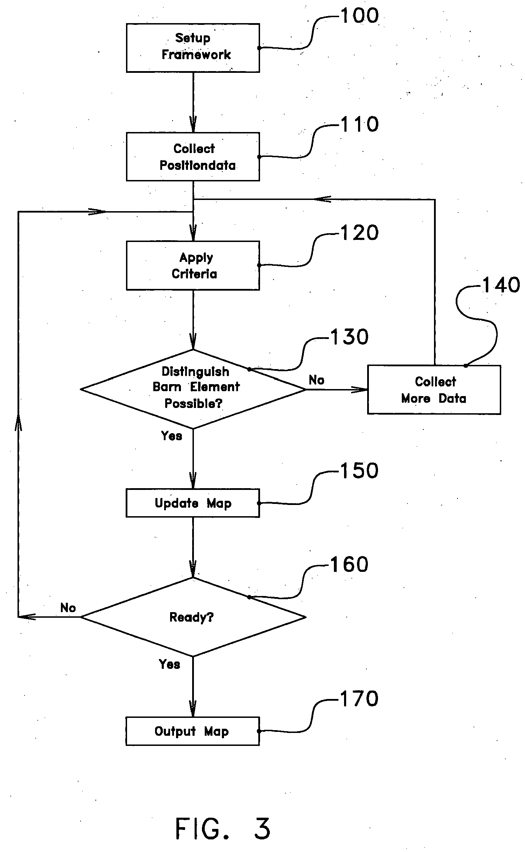

Figure 3 shows a flow diagram of a computer program and method of the present invention.

The first step is a start-up step 100. Here, for example the sets of criteria may be entered, together with the dimensions of the barn, if desired, and other start data. These could also be as few as a label for the barn for which a map is to be drawn.

Then, at 110 the animal position data is collected, by having the location system determine lots of animal positions as a function of time.

In the next step at 120, the criteria are applied to the position data, as explained in all of the above. Here, it is tried to find correlations in the animal position data to enable a barn element to be distinguished.

In the subsequent step, it is checked if a barn element can actually be distinguished. If no, then more position data are needed, and will be collected at step 140, after which the criteria are applied anew. If yes, the map is updated with the distinguished barn element. It is then checked if the program is ready, such as "Are all barn elements located?". If ready, the map is output, ending the program. If not, steps 120 through 160 are repeated.

Of course, this is only a rough outline of the total program, and most of the work will be in designing the criteria and writing code to execute the criteria. Nevertheless, the program will be able to save a lot of work for the user, most often a farmer.

Although the above embodiments have been described in detail, it is to be understood that these embodiments have been given for explanatory purposes only, and are not deemed to be limiting for the scope. Instead, the scope of the invention is determined by the claims as appended.

## Claims

1. Method of automatically creating a digital map of an animal barn (1), wherein the animal barn comprises a plurality of types of barn elements (4a, 4b, 4c, 5, 6, 7, 8, 17, 18, 20, 22), a plurality of animals in said barn, and an animal locating system that is configured to determine a position of at least one of said animals in said barn, the method comprising the steps of
- automatically collecting position data with the animal locating system about the position of said at least one animal in said barn as a function of time
- providing, for at least a plurality of types of barn elements, a first set of criteria for correlating said position data to said type of barn element and a second set of criteria for determining the position of said type of barn element
- automatically applying the sets of criteria to the position data, to thereby derive the type and position of at least a first barn element of a first type,
- automatically creating the map with at least said first barn element and the type and position thereof.

2. Method according to claim 1, further comprising outputting the map to an output device.

3. Method according to any one of the preceding claims, wherein the step of applying the sets of criteria to the position data to thereby create the map comprises deriving the type and position of at least a second barn element of a second type.

4. Method according to any one of the preceding claims, wherein the type of barn elements is selected from a cubicle (5), a feed fence/device (20), a gate (22), a walking path (6), a drinking trough/device (18), an animal body brush (17), a waiting area, a separation area (16), and an animal ID station (11), and in particular a milking robot (10) or an individual feeding station.

5. Method according to any one of the preceding claims, wherein the first set comprises an animal ID station criterion for determining the element type from animal position data, in particular comprising assigning the type of animal ID station (11) to the animal position of an animal, as determined when said animal is identified at said animal ID station, in particular wherein the second set comprises assigning the animal position to the animal ID station position.

6. Method according to claim 5, wherein the barn comprises an animal ID station (11), the method comprising the step of actively determining the animal position of an animal upon identification thereof in an animal ID station.

7. The method according to any one of the preceding claims, wherein the first set comprises at least one movement criterion that is based on at least a movement of an animal, wherein the movement is determined as a time-dependent displacement, in particular in a straight line between two or more consecutively determined positions of said animal.

8. The method of claim 7, wherein said movement criterion comprises a cubicle criterion.

9. The method of claim 8, wherein said cubicle criterion comprises at least one of:
- determining that an animal position remains at a prospect position within a predetermined margin during at least a predetermined period of time, wherein said margin is at most a half length of said animal, and in particular wherein said period of time is at least one hour, and
- determining that said animal movement comprises a movement in a first direction,
followed by a subsequent animal movement in a second direction substantially perpendicular to said first direction, followed by an animal position at a substantially constant prospect position during at least a predetermined first period of time, followed by a animal movement substantially opposite the second direction, followed by a animal movement substantially perpendicular to the second direction,
and wherein the second set comprises assigning a cubicle position to said prospect position.

10. Method according to any one of the preceding claims, further comprising detecting a sound selected from eating sounds, rumination sounds and drinking sounds, by means of a sound sensor worn by at least one of the animals, wherein at least one of the criteria is dependent on the detection of at least one of said sounds.

11. Method according to any one of the preceding claims, wherein the second set comprises assigning to the position of a barn element a position that is based on at least one of the animal positions that were used in positively assigning an element type to said barn element.

12. System configured to automatically create a digital map of an animal barn (1) with a plurality of types of barn elements (4a, 4b, 4c, 5, 6, 7, 8, 17, 18, 20, 22), according to the method of any one of the preceding claims, the system comprising
- an animal location system, configured to determine position data of at least one animal in said barn
- a computer system configured to:
- automatically collect said position data as a function of time, **characterized in that** the computer system is further configured to:
- store a first set of criteria for correlating said position data to said type of barn element and a second set of criteria for determining the position of said type of barn element,
- apply the sets of criteria to the position data, to thereby derive the type and position of at least a first barn element of a first type,
- automatically create the map with at least said first barn element and the type and position thereof.

13. System according to claim 12, further comprising an output device, wherein the computer system is configured to output the map to the output device.

14. System according to claim 12 or 13, wherein the animal location system comprises at least one position tag (25) worn by said at least one animals and a receiver device (3) arranged to detect wirelessly the position of said tag in the barn.

15. System according to any one of claims 12-14, further comprising an arrangement operatively coupled to the computer system and provided with a sound sensor for detecting animal sound, in particular a sound sensor provided on neck tag (25), more in particular on said position tag, comprising at least one of eating sounds, rumination sounds and drinking sounds, and wherein at least one of said sound sensor, said arrangement and said computer system comprises a sound analysis device for sound analysis, configured to analyse said detected animal sound.

## Patentansprüche

1. Verfahren zum automatischen Erzeugen einer digitalen Karte eines Tierstalles (1), wobei der Tierstall eine Vielzahl von Stallelementen (4a, 4b, 4c, 5, 6, 7, 8, 17, 18, 20, 22), eine Vielzahl von Tieren in dem Stall und ein Tierortungssystem, das dafür ausgelegt ist, eine Position von mindestens einem der Tiere in dem Stall zu bestimmen, umfasst, wobei das Verfahren die folgenden Schritte umfasst zum:
- automatischen Sammeln von Positionsdaten mit dem Tierortungssystem über die Position des mindestens einen Tiers in dem Stall als eine Funktion der Zeit
- Vorsehen, für mindestens eine Vielzahl von Arten von Stallelementen, eines ersten Satzes von Kriterien zum Korrelieren der Positionsdaten mit der Art des Stallelements und eines zweiten Satzes von Kriterien zum Bestimmen der Position der Art des Stallelements
- automatischen Anwenden der Sätze von Kriterien auf die Positionsdaten, um dadurch die Art und die Position von mindestens einem ersten Stallelement einer ersten Art abzuleiten,
- automatischen Erzeugen der Karte mit mindestens dem ersten Stallelement und der Art und der Position davon.

2. Verfahren nach Anspruch 1, das ferner das Ausgeben der Karte an eine Ausgabevorrichtung umfasst.

3. Verfahren nach einem der vorhergehenden Ansprüche, wobei der Schritt des Anwendens der Sätze von Kriterien auf die Positionsdaten, um dadurch die Karte zu erzeugen, das Ableiten der Art und der Position von mindestens einem zweiten Stallelement einer zweiten Art umfasst.

4. Verfahren nach einem der vorhergehenden Ansprüche, wobei die Art von Stallelementen ausgewählt wird aus einer Box (5), einem Fütterzaun/einer Füttervorrichtung (20), einem Tor (22), einem Trampelpfad (6), einem Tränktrog/einer Tränkvorrichtung (18), einer Tierkörperbürste (17), einem Wartebereich, einem Trennbereich (16) und einer Tier-Kennungsstation (11) und insbesondere einem Melkroboter (10) oder einer Einzelfütterungsstation.

5. Verfahren nach einem der vorhergehenden Ansprüche, wobei der erste Satz ein Tier-Kennungsstations-Kriterium umfasst zum Bestimmen der Elementart anhand von Tierpositionsdaten, das insbesondere das Zuweisen der Art von Tier-Kennungsstation (11) zur Tierposition eines Tiers umfasst, wie sie bestimmt wird, wenn das Tier an der Tier-Kennungsstation identifiziert wird, insbesondere wobei der zweite Satz das Zuweisen der Tierposition zur Tier-Kennungsstationsposition umfasst.

6. Verfahren nach Anspruch 5, wobei der Stall eine Tier-Kennungsstation (11) umfasst, wobei das Verfahren den Schritt des aktiven Bestimmens der Tierposition eines Tiers bei dessen Identifikation in einer Tier-Kennungsstation umfasst.

7. Verfahren nach einem der vorhergehenden Ansprüche, wobei der erste Satz mindestens ein Bewegungskriterium umfasst, das mindestens auf einer Bewegung eines Tiers basiert, wobei die Bewegung als eine zeitabhängige Verlagerung, insbesondere in einer geraden Linie zwischen zwei oder mehr aufeinanderfolgenden bestimmten Positionen des Tiers, bestimmt wird.

8. Verfahren nach Anspruch 7, wobei das Bewegungskriterium ein Boxkriterium umfasst.

9. Verfahren nach Anspruch 8, wobei das Boxkriterium mindestens eines umfasst von:
- Bestimmen, dass eine Tierposition, innerhalb einer vorherbestimmten Spanne während mindestens eines vorherbestimmten Zeitraums, an einer Erwartungsposition verbleibt, wobei die Spanne höchstens eine halbe Länge des Tiers beträgt und insbesondere wobei der Zeitraum mindestens eine Stunde beträgt, und
- Bestimmen, dass die Tierbewegung eine Bewegung in einer ersten Richtung umfasst,
gefolgt von einer nachfolgenden Tierbewegung in einer zweiten Richtung, die im Wesentlichen senkrecht zur ersten Richtung verläuft, gefolgt von einer Tierposition an einer im Wesentlichen konstanten Erwartungsposition während mindestens eines ersten vorherbestimmten Zeitraums, gefolgt von einer Tierbewegung, die im Wesentlichen entgegengesetzt zur zweiten Richtung verläuft, gefolgt von einer Tierbewegung, die im Wesentlichen senkrecht zur zweiten Richtung verläuft,
und wobei der zweite Satz das Zuweisen einer Boxposition zu der Erwartungsposition umfasst.

10. Verfahren nach einem der vorhergehenden Ansprüche, das ferner das Detektieren eines Geräusches umfasst, das ausgewählt wird aus Fressgeräuschen, Wiederkäugeräuschen und Saufgeräuschen mittels eines Geräuschsensors, der von mindestens einem der Tiere getragen wird, wobei mindestens eines der Kriterien von der Detektion von mindestens einem der Geräusche abhängt.

11. Verfahren nach einem der vorhergehenden Ansprüche, wobei der zweite Satz das Zuweisen einer Position an die Position eines Stallelements umfasst, das auf mindestens einer der Tierpositionen, die beim positiven Zuweisen einer Elementart an das Stallelement verwendet wurden, basiert.

12. System, das ausgelegt ist zum automatischen Erzeugen einer digitalen Karte eines Tierstalles (1) mit einer Vielzahl von Stallelementen (4a, 4b, 4c, 5, 6, 7, 8, 17, 18, 20, 22), gemäß dem Verfahren nach einem der vorhergehenden Ansprüche, wobei das System Folgendes umfasst:
- ein Tierortungssystem, das ausgelegt ist zum Bestimmen von Positionsdaten von mindestens einem Tier in dem Stall
- ein Computersystem, das ausgelegt ist zum:
o automatischen Sammeln der Positionsdaten als eine Funktion der Zeit,
**dadurch gekennzeichnet, dass** das Computersystem ferner ausgelegt ist zum:
o Speichern eines ersten Satzes von Kriterien zum Korrelieren der Positionsdaten mit der Art des Stallelements und eines zweiten Satzes von Kriterien zum Bestimmen der Position der Art des Stallelements,
o Anwenden des Satzes von Kriterien auf die Positionsdaten, um dadurch die Art und die Position von mindestens einem ersten Stallelement einer ersten Art abzuleiten,
o automatischen Erzeugen der Karte mit mindestens dem ersten Stallelement und der Art und der Position davon.

13. System nach Anspruch 12, das ferner eine Ausgabevorrichtung umfasst, wobei das Computersystem ausgelegt ist zum Ausgeben der Karte an eine Ausgabevorrichtung.

14. System nach Anspruch 12 oder 13, wobei das Tierortungssystem mindestens einen Positionsanhänger (25), der von dem mindestens einen Tier getragen wird, und eine Empfängervorrichtung (3), die angeordnet ist, drahtlos die Position des Anhängers in dem Stall zu detektieren, umfasst.

15. System nach einem der Ansprüche 12-14, das ferner eine Anordnung umfasst, die betreibbar mit dem Computersystem gekoppelt ist, und die versehen ist mit einem Geräuschsensor zum Detektieren von Tiergeräuschen, insbesondere einem Geräuschsensor, der an einem Halsanhänger (25) vorgesehen ist, spezieller an dem Positionsanhänger, die Fressgeräusche und/oder Wiederkäugeräusche und/oder Saufgeräusche umfassen, und wobei der Geräuschsensor und/oder die Anordnung und/oder das Computersystem eine Geräuschanalysevorrichtung zur Geräuschanalyse umfasst, die ausgelegt ist zum Analysieren des detektierten Tiergeräuschs.

## Revendications

1. Procédé de création automatique d'une carte numérique d'une grange à animaux (1), la grange à animaux comprenant une pluralité de types d'éléments de grange (4a, 4b, 4c, 5, 6, 7, 8, 17, 18, 20, 22), une pluralité d'animaux dans ladite grange, et un système de localisation d'animal qui est configuré pour déterminer une position d'au moins l'un desdits animaux dans la grange, le procédé comprenant les étapes consistant en
- la collecte automatique de données de position avec le système de localisation d'animal relatives à la position dudit au moins un animal dans ladite grange en fonction du temps
- la fourniture, pour au moins une pluralité de types d'éléments de grange, d'un premier ensemble de critères pour mettre en corrélation lesdites données de position avec ledit type d'élément de grange et un second ensemble de critères pour déterminer la position dudit type d'élément de grange
- l'application automatique des ensembles de critères ou données de position, pour ainsi dériver le type et la position d'au moins un premier élément de grange d'un premier type,
- la création automatique de la carte avec au moins ledit premier élément de grange et le type et la position de celui-ci.

2. Procédé selon la revendication 1, comprenant en outre la production en sortie de la carte vers un dispositif de sortie.

3. Procédé selon l'une quelconque des revendications précédentes, dans lequel l'étape d'application des ensembles de critères aux données de position pour ainsi créer la carte comprend la dérivée du type et de la position d'au moins un deuxième élément de grange d'un deuxième type.

4. Procédé selon l'une quelconque des revendications précédentes, dans lequel le type d'élément de grange est sélectionné parmi un box (5), une barrière/dispositif d'alimentation (20), une grille (22), un chemin de marche (6), un abreuvoir /dispositif d'abreuvement (18), une brosse corporelle pour animaux (17), une zone d'attente, une zone de séparation (16), et une station d'identification d'animal (11), et en particulier un robot de traite (10) ou une station d'alimentation individuelle.

5. Procédé selon l'une quelconque des revendications précédentes, dans lequel le premier ensemble comprend un critère de station d'identification d'animal pour déterminer le type d'élément à partir des données de position d'animal, en particulier comprenant l'attribution du type de station d'identification d'animal (11) à la position d'animal d'un animal, déterminée quand ledit animal est identifié au niveau de ladite station d'identification d'animal, en particulier dans lequel le second ensemble comprend l'attribution de la position d'animal à la position de la station d'identification d'animal.

6. Procédé selon la revendication 5, dans lequel la grange comprend une station d'identification d'animal (11), le procédé comprenant l'étape de détermination active de la position d'animal d'un animal à son identification dans une station d'identification d'animal.

7. Procédé selon l'une quelconque des revendications précédentes, dans lequel le premier ensemble comprend au moins un critère de mouvement qui est basé sur au moins un mouvement d'un animal, dans lequel le mouvement est déterminé comme un déplacement dépendant du temps, en particulier en ligne droite entre deux ou plusieurs positions déterminées consécutivement dudit animal.

8. Procédé selon la revendication 7, dans lequel ledit critère de mouvement comprend un critère de box.

9. Procédé selon la revendication 8, dans lequel ledit critère de box comprend au moins l'une de :
- la détermination qu'une position d'animal reste à une position prévue dans les limites d'une marge prédéterminée durant au moins une période de temps prédéterminée, dans lequel ladite marge est au plus une demi-longueur dudit animal, et en particulier dans lequel ladite période de temps est au moins une heure, et
- la détermination que ledit mouvement d'animal comprend un mouvement dans un premier sens,
suivi par un mouvement d'animal suivant dans un deuxième sens sensiblement perpendiculaire audit premier sens, suivi par une position d'animal à une position prévue sensiblement constante durant au moins une première période de temps prédéterminée, suivi par un mouvement d'animal sensiblement opposé au second sens, suivi par un mouvement d'animal sensiblement perpendiculaire au second sens,
et dans lequel le second ensemble comprend l'attribution d'une position de box à ladite position prévue.

10. Procédé selon l'une quelconque des revendications précédentes, comprenant en outre la détection d'un son sélectionné parmi des sons de mastication, des sons de rumination et des sons d'abreuvement, au moyen d'un capteur acoustique porté par au moins l'un des animaux, dans lequel au moins l'un des critères dépend de la détection d'au moins l'un desdits sons.

11. Procédé selon l'une quelconque des revendications précédentes, dans lequel le second ensemble comprend l'attribution à la position d'un élément de grange d'une position qui est basée sur au moins l'une des positions d'animal qui ont été utilisées dans l'attribution positive d'un type d'élément audit élément de grange.

12. Système configuré pour créer automatiquement une carte numérique d'une grange à animaux (1), la grange à animaux comprenant une pluralité de types d'éléments de grange (4a, 4b, 4c, 5, 6, 7, 8, 17, 18, 20, 22) selon le procédé de l'une quelconque des revendications précédentes, le système comprenant
- un système de localisation d'animal, configuré pour déterminer des données de position d'au moins un animal dans ladite grange
- un système informatique configuré pour :
- collecter automatiquement lesdites données de position en fonction du temps, **caractérisé en ce que** le système informatique est configuré en outre pour :
- mémoriser un premier ensemble de critères pour mettre en corrélation lesdites données de position avec ledit type d'élément de grange et un second ensemble de critères pour déterminer la position dudit type d'élément de grange,
- appliquer les ensembles de critères aux données de position, pour ainsi dériver le type et la position d'au moins un premier élément de grange d'un premier type,
- créer automatiquement la carte avec au moins ledit premier élément de grange et le type et la position de celui-ci.

13. Système selon la revendication 12, comprenant en outre un dispositif de sortie, dans lequel le système informatique est configuré pour produire en sortie la carte vers le dispositif de sortie.

14. Système selon la revendication 12 ou 13, dans lequel le système de position d'animal comprend au moins une balise de position (25) portée par ledit au moins un animal et un dispositif récepteur (3) agencé pour détecter en mode sans fil la position de ladite balise dans la grange.

15. Système selon l'une quelconque des revendications 12 à 14, comprenant en outre un agencement couplé opérationnellement au système informatique et pourvu d'un capteur acoustique pour détecter un son d'animal, en particulier un capteur acoustique monté sur une balise de cou (25), plus particulièrement sur ladite balise de position, comprenant au moins l'un de sons de mastication, de sons de rumination et de sons d'abreuvement, et dans lequel au moins l'un dudit capteur acoustique, dudit agencement et dudit système informatique comprend un dispositif d'analyse acoustique pour réaliser une analyse acoustique, configuré pour analyser ledit son d'animal détecté.
